# EUROPEAN PATENT SPECIFICATION

(11) **EP 1 535 758 B1**
(45) Date of publication and mention of the grant of the patent: **02.08.2006**
(21) Application number: 04020897.7
(22) Date of filing: 02.09.2004
(51) Int. Cl.: B60C 9/06, B60C 15/06

(54) **Pneumatic tyre for racing kart**
Luftreifen für Rennkart
Bandage pneumatique pour kart de compétition

(30) Priority: 27.11.2003 JP 2003397325
(43) Date of publication of application: 01.06.2005
(73) Proprietor: SUMITOMO RUBBER INDUSTRIES, LTD., Kobe-shi, Hyogo (JP)
(72) Inventor: Saiwaki, Izumi, Chuo-ku Kobe-shi Hyogo 651-0072 (JP); Ueda, Toshiaki, Chuo-ku Kobe-shi Hyogo 651-0072 (JP); Mine, Akihiro, Chuo-ku Kobe-shi Hyogo 651-0072 (JP)
(74) Representative: Manitz, Finsterwald & Partner GbR

(56) References cited:
- EP-A- 1 283 113
- PATENT ABSTRACTS OF JAPAN vol. 009, no. 176 (M-398), 20 July 1985 (1985-07-20) & JP 60 047703 A (SUMITOMO GOMU KOGYO KK), 15 March 1985 (1985-03-15)
- PATENT ABSTRACTS OF JAPAN vol. 2003, no. 02, 5 February 2003 (2003-02-05) & JP 2002 301905 A (YOKOHAMA RUBBER CO LTD:THE), 15 October 2002 (2002-10-15)
- PATENT ABSTRACTS OF JAPAN vol. 2000, no. 09, 13 October 2000 (2000-10-13) & JP 2000 177338 A (SUMITOMO RUBBER IND LTD), 27 June 2000 (2000-06-27)

## Description

### BACKGROUND OF THE INVENTION

### Field of the Invention

The present invention relates to a pneumatic tyre to be attached to a racing kart.

### Description of the Related Art

A racing kart comprises a one-passenger car body, and a tyre having an outside diameter of 350 mm or less and an aspect ratio of 0.5 or less is attached to the car body. In a kart race, lap times are compared with each other. Since the racing kart has a low center of gravity and a light weight, a cornering speed is very high in the kart race. In some cases, the kart carries out single-sided running during cornering. A very great force in a lateral direction is applied to a tyre for a racing kart. In order to shorten the lap time, a large lateral stiffness is required for the tyre for the racing kart.

The tyre is roughly divided into a bias tyre and a radial tyre. In a kart race, the bias tyre is to be attached according to a regulation. On the other hand, the kart race is charged with the spread of the bottom layer of motor sports. For this reason, it is necessary to obtain the tyre for the racing kart at a low cost. The degree of design freedom of the tyre for the racing kart is not very high.

If the height of the folded end of a carcass ply is set to be great, the lateral stiffness of the tyre for the racing kart is enhanced. In this method, however, the vertical stiffness of the tyre is also increased. The tyre has a poor following property to a road surface. There is a possibility that the tyre might deteriorate the lap time.

There have been proposed various tyres in which a reinforcing layer is provided around a bead or on a sidewall to enhance a lateral stiffness. For example, Japanese Laid-Open Patent Publication No. Hei 6-255304 has disclosed a tyre for a racing kart in which a reinforcing layer is provided between two carcass plies, resulting in an enhancement in a handling stability. However, the reinforcing layer causes an increase in the number of components and a resultant rise in a manufacturing cost. In addition, a process for manufacturing the tyre having the reinforcing layer is complicated. Furthermore, the reinforcing layer cannot achieve a reduction in the weight of the tyre.

EP-A-1 283 113 shows a tyre comprising the features of the preamble of claim 1.

It is an object of the present invention to provide a tyre for a racing kart which can be obtained at a low cost and is excellent in a handling stability.

### SUMMARY OF THE INVENTION

A tyre for a racing kart according to the present invention comprises a tread portion having an external surface forming a tread surface, a pair of sidewall portions extended inward in an almost radial direction from both ends of the tread portion, a pair of bead portions extended further inward in the almost radial direction from the sidewall portions, and a carcass portion overlaid between both of the bead portions. The carcass portion includes two carcass plies having carcass cords formed by an organic fiber. An absolute value of an angle of the carcass cord with respect to a circumferential direction is 25 to 38 degrees. The bead portion has a bead core and a bead apex taking a tapered shape which is extended outward in the radial direction from the bead core. A complex elastic modulus E* of the bead apex measured on a condition that a temperature is 70°C, a frequency is 10 Hz and an amplitude is 2% is equal to or greater than 80 MPa. In the tyre for a racing kart, the bead apex has a very high hardness. Therefore, a lateral stiffness is high. In the tyre, a vertical stiffness and the lateral stiffness are balanced with each other. The tyre is excellent in a handling stability.

It is preferable that a tensile stress M₁₀₀ of the bead apex with an elongation of 100% should be equal to or greater than 10.0 MPa. It is preferable that the carcass cord should be formed by a nylon fiber, a polyester fiber, a rayon fiber, an aromatic polyamide fiber or a polyethylene naphthalate fiber. The present invention is suitable for a tyre having an outside diameter of 350 mm or less.

### BRIEF DESCRIPTION OF THE DRAWINGS

Fig. 1 is a sectional view showing a part of a tyre for a racing kart according to an embodiment of the present invention, and
Fig. 2 is an enlarged sectional view showing a part of the carcass portion of the tyre in Fig. 1.

### DESCRIPTION OF THE PREFERRED EMBODIMENTS

The present invention will be described below in detail based on a preferred embodiment with reference to the drawings.

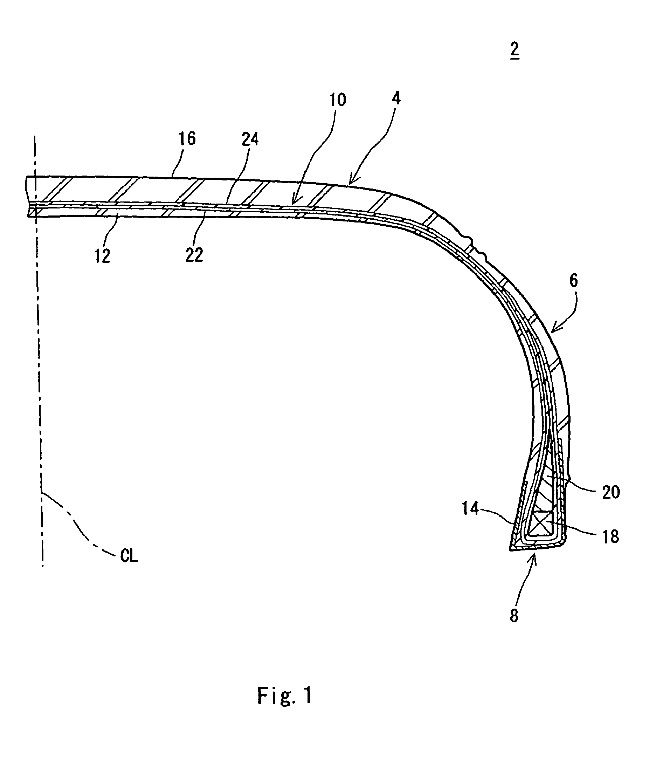

In Fig. 1, a vertical direction is set to be a radial direction of a tyre 2 and a transverse direction is set to be an axial direction of the tyre 2. The tyre 2 takes an almost symmetrical shape about a one-dotted chain line CL1 in Fig. 1. The tyre 2 has an outside diameter of 350 mm or less. The tyre 2 is comparatively small. The tyre 2 comprises a tread portion 4, a sidewall portion 6, a bead portion 8, a carcass portion 10, an inner liner 12 and a chafer 14. The tyre 2 is a pneumatic tubeless tyre.

The tread portion 4 is formed by a crosslinked rubber and takes the shape of a convex outward circular arc in the radial direction. The external surface of the tread portion 4 constitutes a tread surface 16 to come in contact with a road surface. A groove is not formed on the tread surface 16. The tyre 2 is a so-called slick tyre. The tread surface 16 may have a tread pattern formed by a groove, a block or the like.

The sidewall portion 6 is extended inward in the radial direction from a end of the tread portion 4. The sidewall portion 6 is also formed by a crosslinked rubber. The sidewall portion 6 absorbs a shock from the road surface by a flexure. Moreover, the sidewall portion 6 prevents the external damage of the carcass portion 10.

The bead portion 8 is constituted by a bead core 18 and a bead apex 20 extended outward in the radial direction from the bead core 18. The bead core 18 is circular and is formed by a plurality of non-extensible wires (typically, wires formed of steel). The bead apex 20 is outward tapered in the radial direction and is formed by a crosslinked rubber.

The carcass portion 10 is overlaid between the bead portions 8 on both sides along the inner surfaces of the tread portion 4, the sidewall portion 6 and the bead portion 8. The carcass portion 10 is constituted by a first carcass ply 22 and a second carcass ply 24. The first carcass ply 22 and the second carcass ply 24 are wound from an inside toward an outside in the axial direction around the bead core 18.

The inner liner 12 is bonded to the inner surface of the carcass portion 10. The inner liner 12 is also formed by a crosslinked rubber. A rubber having a small air transmittance is used for the inner liner 12. The inner liner 12 plays a part in holding the internal pressure of the tyre 2.

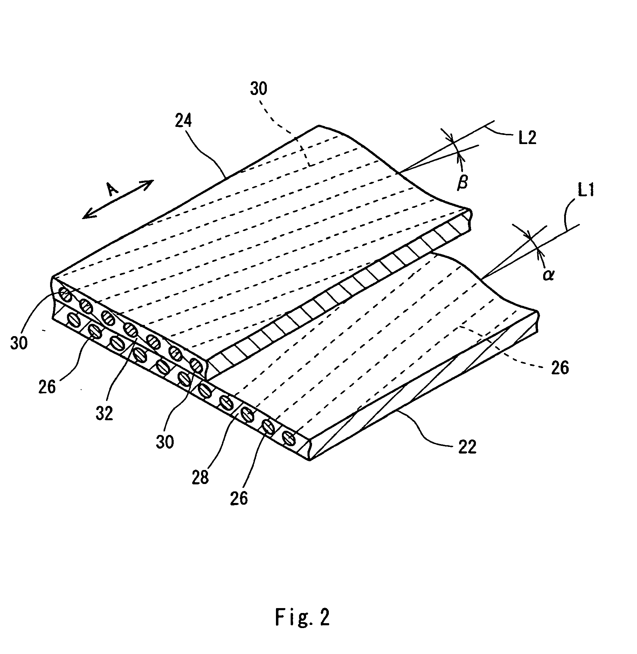

Fig. 2 is an enlarged sectional view showing a part of the carcass portion 10 of the tyre 2 in Fig. 1. In Fig. 2, the circumferential direction of the tyre 2 is shown in an arrow A. The first carcass ply 22 is constituted by a large number of carcass cords 26 provided in parallel and a topping rubber 28. The cords 26 are buried in the topping rubber 28. All of the cords 26 have almost equal diameters. The cord 26 is inclined to a circumferential line L1. The absolute value of the angle of the cord 26 which is formed with respect to the circumferential direction is shown in an arrow α. The second carcass ply 24 is constituted by a large number of carcass cords 30 provided in parallel and a topping rubber 32. The cords 30 are buried in the topping rubber 32. All of the cords 30 have almost equal diameters. The cord 30 is inclined to a circumferential line L2. The absolute value of the angle of the cord 30 which is formed with respect to the circumferential direction is shown in an arrow β.

The inclining direction of the cord 26 of the first carcass ply 22 is reverse to that of the cord 30 of the second carcass ply 24. In other words, the direction of the cord 26 of the first carcass ply 22 and that of the cord 30 of the second carcass ply 24 cross each other. Both of the angles α and β are 25 to 38 degrees. The tyre 2 is a so-called bias tyre. The tyre 2 is excellent in a following property to a road surface.

If the angles α and β are smaller than the range, the vertical stiffness of the tyre 2 is increased so that the following property is damaged in some cases. From this viewpoint, it is more preferable that the angles α and β should be equal to or greater than 27 degrees. If the angles α and β exceed the range, the vertical stiffness of the tyre 2 becomes insufficient. From this viewpoint, it is more preferable that the angles α and β should be equal to or smaller than 35 degrees.

The carcass portion 10 may be constituted by three carcass plies or more. In this case, it is preferable that the absolute values of the angles of the cords which are formed with respect to the circumferential direction in all of the carcass plies should be included in the range.

The carcass cords 26 and 30 are formed by organic fibers. The preferable materials of the carcass cords 26 and 30 include nylon, polyester, rayon, aromatic polyamide and polyethylene naphthalate. Two or more kinds of organic fibers may be used together. The cords 26 and 30 have thicknesses of 940 to 2100 deniers. The densities of the cords 26 and 30 (the numbers of the cords per 5 cm) are 30 to 55 ends. At least two fibers may be twisted to form the cords 26 and 30. In this case, the number of twists per 10 cm is 30 to 55.

A crosslinked rubber having a complex elastic modulus E* of 80 MPa or more is used for the bead apex 20. The bead apex 20 has a very high hardness. In the case in which a force in a lateral direction is applied to the tyre 2, a great reaction force is generated by the bead apex 20. The tyre 2 has a high lateral stiffness. The hardness of the bead apex 20 does not greatly influence the vertical stiffness of the tyre 2. The tyre 2 has a great lateral stiffness in comparison with a small vertical stiffness. In the tyre 2, a following property to a road surface in cornering and a resistance to a lateral force are consistent with each other by the multiplier effect of the carcass portion 10 having a bias structure and the bead apex 20 having a high hardness. The tyre 2 exhibits an excellent handling stability in cornering.

In respect of the handling stability, the complex elastic modulus E* of the bead apex 20 is more preferably 85 MPa or more, and particularly preferably 100 MPa or more. Usually, the complex elastic modulus E* is equal to or smaller than 130 MPa.

The complex elastic modulus E* is measured by a viscoelasticity spectrometer (trade name of "VA-200" manufactured by SHIMADZU CORPORATION) on the following conditions according to the regulation of "JIS-K 6394".
Initial strain : 10 %
Amplitude : 2 %
Frequency : 10 Hz
Deformation mode : tension
Starting temperature : -100°C
Ending temperature : 100°C
Temperature rising speed : 3°C/min
Measuring temperature : 70°C

A specimen to be used in measurement by the viscoelasticity spectrometer is plate-shaped and has a length of 45 mm, a width of 4 mm and a thickness of 2 mm. Both ends of the specimen are chucked to carry out the measurement. The displaced portion of the specimen has a length of 30 mm. The specimen is cut out of the bead apex 20. In the case in which the cut-out is hard to perform, a slab having a thickness of 2 mm is formed and crosslinked by the same composition as the bead apex 20 through a mold, and the specimen is punched out of the slab. The slab is formed and crosslinked at 160°C for 10 minutes.

In respect of the acquirement of a sufficient lateral stiffness, a tensile stress M₁₀₀ of the bead apex 20 with an elongation of 100% is preferably equal to or greater than 10.0 MPa and is particularly preferably equal to or greater than 10. 5 MPa. Usually, the tensile stress M₁₀₀ is equal to or smaller than 15 MPa.

The tensile stress M₁₀₀ is measured by a tension testing machine (trade name of "STROGRAPH TYPE T" manufactured by TOYO SEIKI SEISAKUSHO) on the following conditions according to the regulation of "JIS-K 6251".
Shape of specimen : Dumbbell No. 3
Tensile speed : 500 mm/min

The specimen to be used in a tension test is cut out of the bead apex 20. In the case in which the cut-out is hard to perform, the slab having a thickness of 2 mm is formed and crosslinked by the same composition as the bead apex 20 through a mold, and the specimen is punched out of the slab. The slab is formed and crosslinked at 160°C for 10 minutes.

For a method of obtaining the bead apex 20 having a high hardness,
(1) the amount of mixture of a crosslinking agent in a rubber composition is increased;
(2) the amount of mixture of a reinforcing agent in the rubber composition is increased;
(3) a special base rubber is used for the rubber composition; and
(4) a resin is mixed into the rubber composition.

In the tyre 2, the material of the bead apex 20 is devised so that the lateral stiffness is enhanced. In other words, it is not necessary to use other members in order to enhance the lateral stiffness. A process for manufacturing the tyre 2 is simple. The tyre 2 can be obtained at a low cost. As a matter of course, other members may be used auxiliarily.

### EXAMPLES

### [Example 1]

A tyre having the structure shown in Fig. 1 was obtained. The tyre comprises a first carcass ply having an angle α of 30 degrees and a second carcass ply having an β of 30 degrees. The bead apex of the tyre has a complex elastic modulus E* of 102 MPa and a tensile stress M₁₀₀ of 10.8 MPa. The tyre has a size of "11 x 7.10 - 5" and has an outside diameter of 280 mm.

### [Examples 2 and 5 and Comparative Examples 1 and 6]

A tyre was obtained in the same manner as in the example 1 except that the angle of a carcass cord was set as shown in the following Table 1.

### [Examples 3 and 4 and Comparative Examples 2 to 5]

A tyre was obtained in the same manner as in the example 1 except that the material of a bead apex was set as shown in the following Table 1.

### [Evaluation]

A rim having a size of "8.0 x 5" was incorporated in a tyre and the internal pressure of the tyre was set to be 0.8 kgf/cm². The rim was attached to the rear wheel of a racing kart and ten laps were made around a kart course having an overall length of 716 m. At this time, a lap time was measured for third and six laps. A driver was caused to evaluate a handling stability in cornering in ten stages of "1" to "10". These results are shown in the following Table 1.

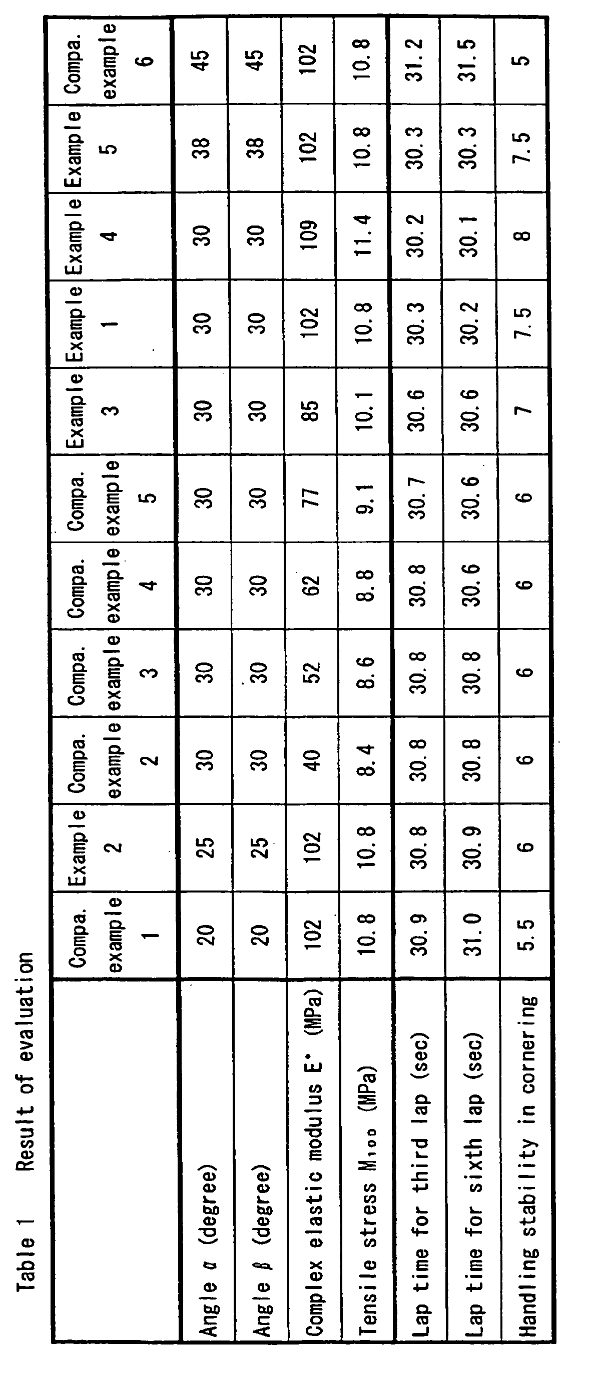

As shown in the Table 1, the tyre according to each of the examples takes a short lap time and has an excellent handling stability. From the result of the evaluation, the advantages of the present invention are apparent.

The tyre according to the present invention can be attached to front wheels of a racing kart as well as rear wheels thereof. The above description is only illustrative and various changes can be made without departing from the scope of the present invention.

## Claims

1. A pneumatic tyre (2) for a racing kart comprising a tread portion (4) having an external surface forming a tread surface, a pair of sidewall portions (6) extended inward in an almost radial direction from both ends of the tread portion, a pair of bead portions (8) extended further inward in the almost radial direction from the sidewall portions, and a carcass portion (10) overlaid between both of the bead portions,
wherein the carcass portion includes two carcass plies (22,24) having carcass cords formed by an organic fiber,
an absolute value of an angle of the carcass cord with respect to a circumferential direction is 25 to 38 degrees,
the bead portion has a bead core (18) and a bead apex (20) taking a tapered shape which is extended outward in the radial direction from the bead core, **characterized in that**
a complex elastic modulus E* of the bead apex measured on a condition that a temperature is 70°C, a frequency is 10 Hz and an amplitude is 2% is equal to or greater than 80 MPa.

2. The pneumatic tyre according to claim 1, wherein a tensile stress M₁₀₀ of the bead apex with an elongation of 100% is equal to or greater than 10.0 MPa.

3. The pneumatic tyre according to claim 1 or 2, wherein the carcass cord is formed by a nylon fiber, a polyester fiber, a rayon fiber, an aromatic polyamide fiber or a polyethylene naphthalate fiber.

4. The pneumatic tyre according to any of claims 1 to 3, wherein an outside diameter is equal to or smaller than 350 mm.

## Patentansprüche

1. Luftreifen (2) für ein Renn-Kart, umfassend einen Laufflächenabschnitt (4) mit einer Außenfläche, die eine Laufflächen-Oberfläche bildet, ein Paar Seitenwandabschnitte (6), die sich in einer beinahe radialen Richtung von beiden Enden des Laufflächenabschnitts nach innen erstrecken, ein Paar Wulstabschnitte (8), die sich weiter einwärts in der beinahe radialen Richtung von den Seitenwandabschnitten erstrecken, und einen Karkassabschnitt (10), der zwischen beiden Wulstabschnitten überlagert ist,
wobei der Karkassabschnitt zwei Karkasslagen (22, 24) umfasst, die Karkasskorde aufweisen, die aus einer organischen Faser gebildet sind,
ein Absolutwert eines Winkels des Karkasskords in Bezug auf eine Umfangsrichtung 25 bis 38 Grad beträgt,
der Wulstabschnitt einen Wulstkern (18) und einen Wulstkernreiter (20) aufweist, der eine verjüngte Form annimmt, die sich von dem Wulstkern nach außen in der radialen Richtung erstreckt,
**dadurch gekennzeichnet, dass**
ein komplexer Elastizitätsmodul E* des Wulstkernreiters, gemessen in einem Zustand, dass eine Temperatur 70°C beträgt, eine Frequenz 10 Hz beträgt und eine Amplitude 2 % beträgt, gleich oder größer als 80 MPa ist.

2. Luftreifen nach Anspruch 1, wobei eine Zugspannung M₁₀₀ des Wulstkernreiters bei einer Dehnung von 100 % gleich oder größer als 10,0 MPa ist.

3. Luftreifen nach Anspruch 1 oder 2, wobei der Karkasskord durch eine Nylonfaser, eine Polyesterfaser, eine Rayonfaser, eine Faser aus aromatischem Polyamid oder eine Polyethylennaphthalatfaser gebildet ist.

4. Luftreifen nach einem der Ansprüche 1 bis 3, wobei ein Außendurchmesser gleich oder kleiner als 350 mm ist.

## Revendications

1. Bandage pneumatique (2) pour kart de course comprenant une partie (4) de bande de roulement ayant une surface externe formant une surface de bande de roulement, une paire de parties (6) de flanc qui s'étend vers l'intérieur dans une direction presque radiale depuis les deux extrémités de la partie de bande de roulement, une paire de parties (8) de talon qui s'étend davantage vers l'intérieur dans la direction presque radiale depuis les parties de flanc, et une partie (10) de carcasse revêtue entre les deux parties de talons,
où la partie de carcasse comporte deux plis (22, 24) de carcasse ayant des câblés de carcasse formés par une fibre organique,
une valeur absolue d'un angle du câblé de carcasse par rapport à une direction circonférentielle est de 25 à 38 degrés,
la partie de talon a une tringle (18) de talon et un sommet (20) de talon prenant une forme effilée qui s'étend vers l'extérieur dans la direction radiale à partir de la tringle de talon, **caractérisé en ce que**
un module d'élasticité complexe E* du sommet de talon mesuré dans une situation où une température est de 70°C, une fréquence est de 10 Hz et une amplitude est de 2 % est égale ou supérieure à 80MPa.

2. Bandage pneumatique selon la revendication 1, dans lequel une contrainte de traction M₁₀₀ du sommet de talon avec un allongement de 100 % est égale ou supérieure à 10,0 MPa.

3. Bandage pneumatique selon la revendication 1 ou 2, dans lequel le câblé de carcasse est formé par une fibre de nylon, une fibre de polyester, une fibre de rayonne, une fibre de polyamide aromatique ou une fibre de polyéthylène naphtalate.

4. Bandage pneumatique selon l'une quelconque des revendications 1 à 3, dans lequel un diamètre extérieur est égal ou inférieur à 350 mm.
